## Europäisches Patentamt

## European Patent Office

## Office européen des brevets

(11) Veröffentlichungsnummer : **0 447 467 B1**

(12) **EUROPÄISCHE PATENTSCHRIFT**

(45) Veröffentlichungstag der Patentschrift :
04.08.93 Patentblatt 93/31

(21) Anmeldenummer : 90900799.9

(22) Anmeldetag : 06.12.89

(86) Internationale Anmeldenummer :
PCT/EP89/01494

(87) Internationale Veröffentlichungsnummer :
WO 90/06166 14.06.90 Gazette 90/14

(51) Int. Cl.⁵ : **B01D 61/36, B01D 71/74**

(54) **KOLLAGENFOLIE ALS PERVAPORATIONSMEMBRAN.**

(30) Priorität : 10.12.88 DE 3841716

(43) Veröffentlichungstag der Anmeldung :
25.09.91 Patentblatt 91/39

(45) Bekanntmachung des Hinweises auf die
Patenterteilung :
04.08.93 Patentblatt 93/31

(84) Benannte Vertragsstaaten :
AT BE CH DE ES FR GB IT LI LU NL SE

(56) Entgegenhaltungen :
EP-A- 0 164 608
GB-A- 568 726
US-A- 1 779 942
US-A- 2 953 502
US-A- 2 956 070
US-A- 3 644 202

(56) Entgegenhaltungen :
US-A- 4 097 234
PATENT ABSTRACTS OF JAPAN; vol. 7, nr.
277 (C-199)(1422)09 December 1983 & JP-
A-58156304 (SUMITOMO KAGAKU KOGYO
K.K.) 17 September 1983

(73) Patentinhaber : **Naturin GmbH & Co**
**Badeniastrasse 13**
**W-6940 Weinheim/Bergstrasse (DE)**

(72) Erfinder : **KÜHN, Joachim**
**Tulpenweg 8**
**W-6940 Weinheim/Bergstrasse (DE)**
Erfinder : **MASER, Franz**
**Wintergasse 27**
**W-6940 Weinheim/Bergstrasse (DE)**

(74) Vertreter : **Klöpsch, Gerald, Dr.-Ing.**
**Patentanwalt**
**An Gross St. Martin 6**
**W-5000 Köln 1 (DE)**

Jouve, 18, rue Saint-Denis, 75001 PARIS

## Beschreibung

Die Erfindung betrifft die Verwendung von Kollagenfolien als Membran für Pervaporations-Trennverfahren.

Als Pervaporation wird der selektive Stofftransport aus der flüssigen Phase in die Dampfphase bezeichnet. Die Trennung erfolgt mittels einer nicht porösen Lösungsdiffusionsmembran. Hierbei wird ein zu trennendes Flüssigkeitsgemisch auf eine solche Membran geleitet, wobei der Raum auf der anderen Seite der Membran evakuiert und unter vermindertem Druck gehalten wird.

Es ist ebenfalls möglich, das dampfförmige Permeat mit Hilfe einer die Membran bzw. den porösen Träger nicht benetzenden Flüssigkeit, z.B. gemäß DE-OS 35 36 007, oder mittels eines Trägergases abzuführen.

Die Membran besitzt für eine oder mehrere Komponenten des Gemischs eine wesentlich erhöhte Durchlässigkeit. Diese Selektivität läßt sich durch die Löslichkeit und/oder Diffusivität der einzelnen Komponenten in der Membran beschreiben.

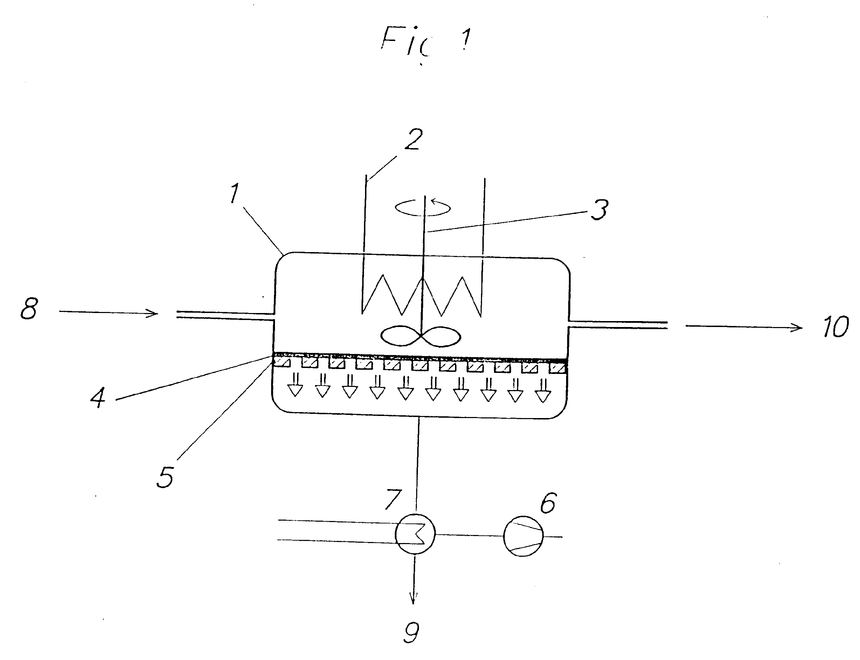

Die treibende Kraft ist der Konzentrationsgradient der die Membran durchdringenden Komponenten der Permeanten über die Membrandicke. Eine Komponente mit höherer Löslichkeit und günstigeren Diffusionseigenschaften in der Membranmatrix kann nach Durchdringen der Membran auf der Rückseite als Permeat in dampfförmiger Phase abgezogen werden, während eine Komponente mit geringerer Löslichkeit bzw. ungünstigeren Diffusionseigenschaften zurückgehalten wird (Retentat). Das dampfförmige Permeat wird in nachgeschalteten Kühleinrichtungen wieder verflüssigt und abgeführt. Das beschriebene Prinzip einer derartigen Pervaporationsvorrichtung ist in Fig. 1 dargestellt.

In der Literatur sind eine Vielzahl unterschiedlicher Membrantypen beschrieben, die in Pervaporationsverfahren verwendet werden können. Hierbei handelt es sich vor allem um Membranen aus den verschiedenartigsten Kunststoffen, wie z.B. Polyamiden, N-Vinylpyrrolidon-Pfropfpolymeren, Polyvinylpyridin, fluorhaltige Kationenaustauschermembranen, Polyethylen, Polypropylen, Pfropfcopolymere mit einer Hauptkette aus Polystyrol und einer Seitenkette aus Perfluoralkylacrylat und Poly(disubstituiertes Acetylen)/Polyorganosiloxanpfropfcopolymer.

Eine Übersicht über die Pervaporation als Trennverfahren sowie über die verwendeten synthetischen Membrantypen findet sich bei W. Böddeker: "Pervaporation durch Membranen und ihre Anwendung zur Trennung von Flüssiggemischen", Düsseldorf 1986.

Neben Membranen auf Kunststoffbasis sind auch Lösungsdiffusionsmembranen aus verschiedenen Naturstoffen bekannt. So wurde bspw. Chitosan in unterschiedlichster Weise modifiziert. Die JP-A- 60031803 beschreibt eine Membran aus deacetyliertem und verseiftem Chitosan. Nach der JP-A- 61093802 werden in einer N-modifizierten Chitosanmembran wenigstens 10 Mol-% der freien Aminogruppen des Chitosans durch einen hydrophilen Substituenten ersetzt.

In der JP-A- 62004407 ist die Polymerisation von Chitosan mit polaren Vinylmonomeren beschrieben. Die Vinylmonomeren enthalten saure, basische oder andere funktionelle Gruppen oder enthalten z.T. Stickstoff-, Sauerstoff-, Schwefel-, Phosphor- oder Halogenatome, mit denen die Aminogruppen der Glukosamine in Wechselwirkung treten können.

Durch die Einbeziehung von Metallionen wird ein weiterer Membrantyp gebildet.

Die JP-A- 61287407 beschreibt die Einlagerung von Schwermetallionen in Membranen aus Chitosan. Bevorzugt handelt es sich hierbei um Metalle der Gruppe IV oder einer höheren Gruppe des Periodensystems in Form ihrer Oxide, Cyanide oder Thiocyanate.

Auch Cellulosemembranen sind in der Literatur beschrieben. Neben den seit langem bekannten Membranen aus Cellulosetriacetat (CTA) sind auch Membranen aus regenierter Cellulose in der JP-A- 61200927 und aus Cellulosecarbamat in der DE-A-37 14 784 beschrieben.

Eine mit zweiwertigen Kationen und Anionen (Sulfat, Dihydrogenphosphat, Acetat oder Nitrat) modifizierte Membran aus regenerierter Cellulose ist aus der JP-A- 61000404 bekannt.

In der JP-A- 62171705 ist eine zusammengesetzte Membran beschrieben. Die äußere Schicht ist ein Quervernetzungsprodukt aus einer multifunktionalen Melaminkomponente und einem wasserlöslichen Polysaccharid, welches eine Sulfonsäure- oder eine Sulfonatgruppe enthält, z.B. Sulfoethylcellulose oder ihre Alkalisalze. Die Dicke der beschriebenen Schicht beträgt weniger als 3 μm.

Nach der JP-A- 58008505 wird auf einem porösen Träger aus Polysulfonharz eine wäßrige, alkalische Lösung aus Dextran aufgetragen und das Dextran durch Zugabe von Epihalohydrin und anschließendes Erhitzen vernetzt.

Die JP-A- 63016007 beschreibt eine Lösungsdiffusionsmembran aus Alginsäure, die mittels mehrwertiger Metallionen vernetzt wird, wobei Alkali- und Übergangsmetalle sowie Metalle aus den Gruppen IIIb und IVb des Periodensystems zur Anwendung kommen.

Kollagenfolien sind als Verpackungsmaterial, insbesondere für Fleschereierzeugnisse, und im kosmeti-

schen und medizinischen Bereich, z.B. als Wundabdeckungen, Implantate oder als Ausgangsmaterial für chirurgisches Nähgarn bekannt. Weiterhin finden sie in der Zellkultur Verwendung, wo durchlässige Folien zur Anhaftung bestimmter Zelltypen, besonders von Epithelzellen, benutzt werden. In der DE-A 19 45 527 ist beispielsweise eine solche Kollagenfolie beschrieben, die wegen des Austauchs von Kulturmedium vorzugsweise stark porös ist. Derartige Zellkulturen finden auch als Grundlage zur Heranbildung künstlicher Haut Verwendung. Eine poröse Trennmembran auf Basis von Kollagen wird in der DE-A- 20 04 987 für den Bereich der Dialyse beschrieben.

Gemäß US-A- 3,644,202 läßt sich eine Folie aus mikrokristallinem Kollagen als Osmosemembran zur Entsalzung von Wasser verwenden. Hierbei werden, wie aus den Beispielen ersichtlich ist, Retentionswerte erreicht, die verglichen mit den für industriell betriebene Anlagen erforderlichen Werten als sehr gering einzustufen sind.

In der US-A- 4,097,234, die ein Verfahren zur Herstellung einer wässrigen Dispersion von Kollagenfasern und verschiedener Produkte aus der Dispersion beschreibt, ist ganz allgemein auf die Verwendbarkeit der aus der Kollagenfaserdispersion gefertigten Artikel verwiesen. Dabei wird auch auf die Verwendung von Kollagenmembranen für medizinische und Nahrungsmittelzwecke sowie für Zwecke des täglichen und des industriellen Gebrauchs hingewiesen.

Aus den Patent Abstracts of Japan Vol.7, Nr. 277 (C-199) (9.12.1983) ist zu entnehmen, daß bei Verwendung einer Umkehrosmosemembran mit spezifischen Ausströmeigenschaften im Hinblick auf eine zu verwendende individuelle organische Verbindung eine Verbesserung gegenüber einer konventionellen Pervaporation erzielt werden kann.

In der US-A-1,779,942 ist allgemein beschrieben, daß aus Gemischen von Cellulose/Nitrocellulose und einem Protein bzw. Proteinderivat oder Verdauungs- oder Hydrolyseprodukten von Proteinen in einem sauren Lösungsmittel Membranen hergestellt werden können, die zur Dialyse und Pervaporation geeignet sein sollen.

Der vorliegenden Erfindung lag die Aufgabe zugrunde, eine hochwirksame, nicht poröse Membran zur Anwendung in Pervaporations-Trennverfahren bereitzustellen.

Überraschend wurde gefunden, daß sich Kollagenfolien als hydrophile Lösungsdiffusionsmembranen in Pervaporationseinrichtungen eignen. Als besonders überraschend haben sich dabei die mit diesen Membranen erzielbaren hohen Durchflußraten für Wasser herausgestellt, die bereits bei niedrigen Betriebstemperaturen erreicht werden können. Für Methanol liegen die unter entsprechenden Bedingungen beobachteten Membranflüsse ca. sechsfach niedriger. Aus diesen Ergebnissen resultiert vorteilhaft ein Einsatz von Kollagenfolien zur Aufkonzentrierung empfindlicher oder wertvoller Substanzen, z.B. von Aromastoffen und zur Auftrennung von auf andere Weise schwierig zu trennenden Gemischen, wie Azeotropen.

Darüber hinaus ergeben sich aus der Beschreibung für den Fachmann weitere Anwendungen, so z.B. die Entfernung von Wasser bei Kondensationsreaktionen, die Entwässerung von organischen Lösungsmitteln sowie der Einsatz in Bioreaktoren.

Für die erfindungsgemäße Verwendung von Kollagenfolien als Lösungsdiffusionsmembranen für Pervaporationsverfahren sind alle herkömmlichen, nach an sich bekannten Verfahren herstellbaren Folien aus Kollagen geeignet. Stellvertretend für die bekannten Folien werden die aus der CA-A- 885 901 und der DE-A- 19 45 527 bekannten Folien erwähnt. Vorteilhaft wird in der Regel aus Rinderhautspalt über ein alkalisches Aufschlußverfahren, anschließende Säuerung und Zerkleinerung des erhaltenen Materials eine saure Kollagenmasse hergestellt, der weitere Zusatzstoffe, insbesondere Weichmacher, Quervernetzungsmittel und andere hochmolekulare Stoffe, wie Gelatine, Gluten, Alginate, Sojaprotein, Casein oder Zein zugesetzt werden könnnen.

Eine solche Masse kann in einen Gießrahmen auf einen Träger gegossen und dort koaguliert und getrocknet werden. Da auf diese Weise jedoch nur schwer Folien einer reproduzierbaren gleichmäßigen Dicke hergestellt werden können, wird ein Extrusions- oder kontinuierliches Gießverfahren bevorzugt, bei dem die Folienmasse durch eine Schlitzdüse auf ein Endlosförderband gepreßt oder gegossen, anschließend getrocknet und schließlich unter konstanter Spannung aufgewickelt wird, wie beispielsweise in der DE-A 19 45 527 beschrieben wird. Durch Einregulieren der Geschwindigkeit des Endlosförderbandes und/oder Einstellen der Höhe des Extrusionsschlitzes können Folien beliebiger Länge und Breite mit konstanter Dicke hergestellt werden. Vorzugsweise wird nach einem in der DE-A- 19 45 527 beschriebenen Verfahren die Folienmasse direkt auf den späteren Träger gebracht, z.B. eine Bahn eines Polypropylen-Spinnvlieses, die sich mit gleicher Geschwindigkeit wie die Folie bewegt. Trägervlies und Folie können jedoch auch erst in der Trennzelle lose zusammengefügt werden.

Die bevorzugte Dicke im trockenen Zustand von auf diese Weise hergestellten Folien beträgt 2-150μm, besonders bevorzugt ist eine Dicke von 10-30μm.

Die Kollagenfolie kann auf verschiedene Weise modifiziert werden. So kann beispielsweise der Vernetzungsgrad durch Umsetzung mit Substanzen variiert werden, die zur Ausbildung von Wasserstoffbrücken (z.B.

pflanzliche Gerbstoffe, Phenole), ionischen Brücken (mehrwertige Kationen), koordinativen Bindungen (z.B. in der Chromgerbung) oder kovalenten Verknüpfungen (z.B. Aldehyde, Dialdehyde, Diisocyanate oder andere mindestens bifunktionelle reaktive Verbindungen) befähigt sind.

Quervernetzungen können auch durch Einwirkung energiereicher Strahlung (UV- oder Röntgenstrahlung) oder durch Hitzehärtung erzeugt werden. Kombinationen verschiedener Vernetzungstechniken sind möglich. Als weitere Modifizierungsmöglichkeiten sind Hydrophilisierung, Hydrophobisierung und/oder Variation des Ladungsmusters durch aus der Peptid- und Proteinchemie bekannte Umsetzungen zu nennen.

Durch die Wahl der jeweiligen Modifizierung sind sowohl die Trennleistung der Kollagenmembran (Selektivität, transmembraner Fluß) als auch deren Standzeit in einem Pervaporationsverfahren beeinflußbar.

Nach der erfindungsgemäßen Lehre werden die beschriebenen Kollagenmembranen in Pervaporationseinrichtungen verwendet, die den in Fig. 1 schematisch dargestellten prinzipiellen Aufbau haben können.

Die Membran (4) wird auf eine in einem Trennraum (1) befindliche Stützscheibe (5) aufgebracht. Der Trennraum (1), der auf der Zulaufseite (8) mit einer Heiz- (2) und Rührvorrichtung (3) ausgestattet ist, ermöglicht einen Abzug der durch die Membran tretenden Dämpfe als verflüssigtes Permeat (9) nach Durchtritt durch einen Kondensator (7).

Zur Erzeugung des für den Dampfdurchtritt erforderlichen Vakuums auf der Permeatseite ist der Trennraum mit einer Vakuumpumpe (6) verbunden. Die nicht durch die Membran diffundierenden Lösungsbestandteile werden auf der Zulaufseite als sogenanntes Retentat (10) abgezogen.

Die erfindungsgemäße Verwendung ist nicht auf den Einsatz von Kollagenflachfolien beschränkt. Ebenso ist eine Verwendung von Kollagenschlauchfolien denkbar. Hierzu wird auf die Innen- und Außenseite eines perforierten Stützrohres eine Kollagenschlauchfolie aufgebracht. Mehrere solcher Rohre können in Modulen vereinigt werden, wie sie z.B. in Anlagen für die Ultrafiltration oder die Umkehrosmose bekannt sind.

Zur Veranschaulichung der Erfindung dienen die im folgenden aufgeführten Beispiele für die Verwendung von Kollagenfolien für verschiedene Trennprobleme. Durch entsprechende Modifikation der verwendeten Membran bzw. apparative Anpassung der Pervaporationseinrichtung wird der Fachmann die erfindungsgemäße Lehre an weitere Einsatzmöglichkeiten in geeigneter Weise anpassen können.

Beispiel 1

Es wurde eine Kollagenfolie aus alkalisch vorbehandelter und nach Säuern zu einer Masse verarbeitete Rinderhaut verwendet, deren Dicke im trockenen Zustand 10 µm beträgt.

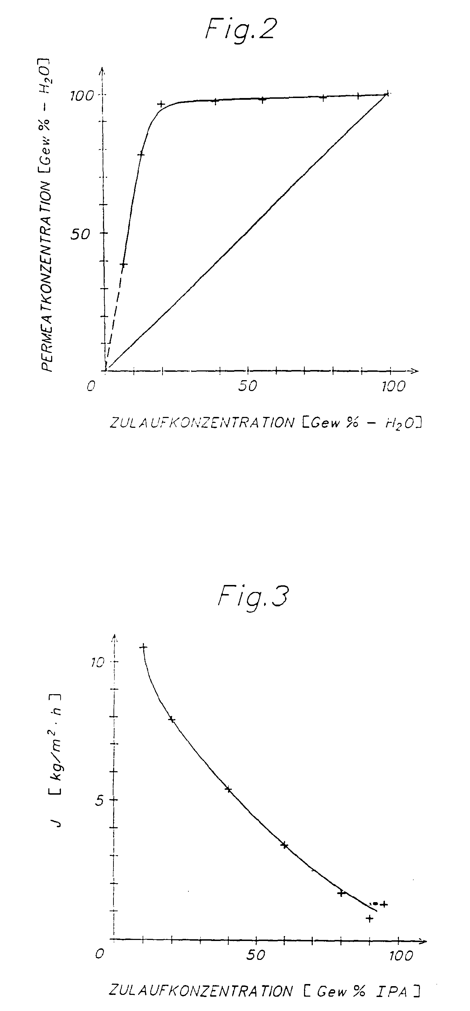

Isopropanol/Wasser-Gemische mit Zusammensetzungen, die alle Konzentrationsbereiche überdecken, wurden bei einer Temperatur auf der Zulaufseite des Trennraums von 30°C und einem Druck von < 4 mbar auf der Seite des Permeatabzugs einer Trennung durch Pervaporation unterworfen. Die erhaltenen Ergebnisse sind in den Figuren 2 und 3 zusammenfassend grafisch dargestellt.

Fig. 2 gibt die Konzentration des Wassers im Permeat in Abhängigkeit von der Konzentration des Wassers im Zulauf an. Bei der gewählten Art der Darstellung würden Werte, die auf der in Fig. 2 eingezeichneten Diagonalen liegen, das Fehlen jeglicher Selektivität bedeuten, während bei ausschließlichem Durchtritt von Wasser durch die Membran, also einer Konzentration des Wassers im Permeat von 100%, eine vollständige Selektivität vorliegen würde.

Die Darstellung der Abhängigkeit der Gesamtflußdichte J kg/m² x h von dem im Zulauf enthaltenen Isopropanolgehalt (IPA) zeigt eine annähernd exponentielle Abnahme der Gesamtflußdichte mit zunehmender Isopropanolkonzentration (Fig. 3).

Beispiel 2

Es wurde eine Kollagenfolie mit einer Dicke von 25µm verwendet, die wie in Beispiel 1 beschrieben hergestellt wurde. Im Anschluß an ihre Herstellung wurde zur Erhöhung des Vernetzungsgrades eine Umsetzung mit EDC (N-(3-Dimethylaminopropyl)-N'-ethylcarbodiimidhydrochlorid) vorgenommen.

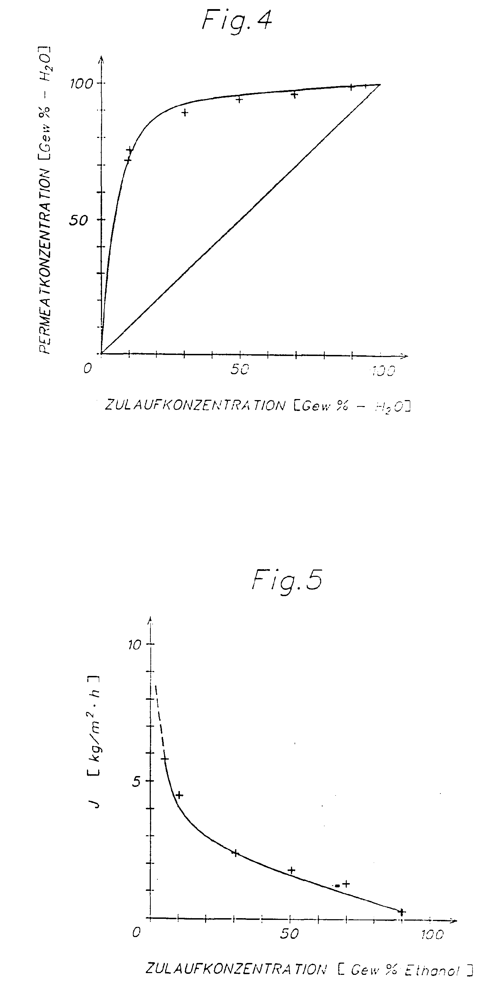

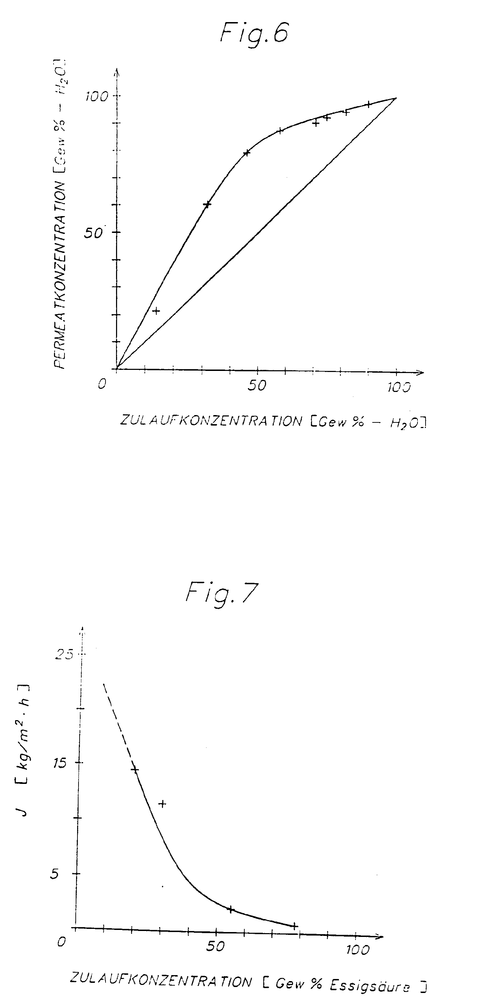

Ethanol/Wasser-Gemische mit Zusammensetzungen, die alle Konzentrationsbereiche überdecken, wurden bei einer Temperatur auf der Zulaufseite des Trennraums von 30°C und einem permeatseitigen Druck von < 4mbar einer Pervaporationstrennung unterworfen. Die erhaltenen Ergebnisse sind in den Figuren 4 und 5 zusammenfassend dargestellt.

Fig. 4 gibt die Konzentration des Wassers im Permeat in Abhängigkeit von der Konzentration des Wassers im Zulauf an. Die Darstellung der Abhängigkeit der Gesamtflußdichte J kg/m² x h von dem im Zulauf enthaltenen Ethanolgehalt (Fig. 5) zeigt eine annähernd exponentielle Abnahme der Gesamtflußdichte mit zunehmender Ethanolkonzentration.

## Beispiel 3

Eine wie in Beispiel 1 hergestellte Kollagenmembran mit einer Dicke von 25μm wurde zur Aufkonzentrierung von Essigsäure aus Essigsäure/Wasser-Gemischen eingesetzt. Die Temperatur auf der Zulaufseite betrug 30°C, der Druck auf der Permeatseite < 4 mbar.

Es wurden Trennungen mit Mischungen durchgeführt, die alle Konzentrationsbereiche überdecken. Die Ergebnisse sind in den Figuren 6 und 7 grafisch dargestellt.

Fig. 6 gibt die Selektivität der Trennung als Darstellung der Abhängigkeit der Wasserkonzentration im Permeat von dem Wassergehalt im Zulauf an.

Die Gesamtflußdichte J nimmt mit steigendem Gehalt an Essigsäure im Zulauf in der in Fig. 7 dargestellten Weise ab.

## Beispiel 4

Eine Kollagenmembran wie in Beispiel 3 beschrieben wurde im Anschluß an ihre Herstellung einer Chromgerbung unterzogen. Die so modifizierte Membran wurde zur Aufkonzentrierung von Monoethylenglycol aus einem Monoethylenglycol/Wasser-Gemisch benutzt. Die Temperatur auf der Zulaufseite betrug 40°C, der Druck auf der Permeatseite < 4 mbar.

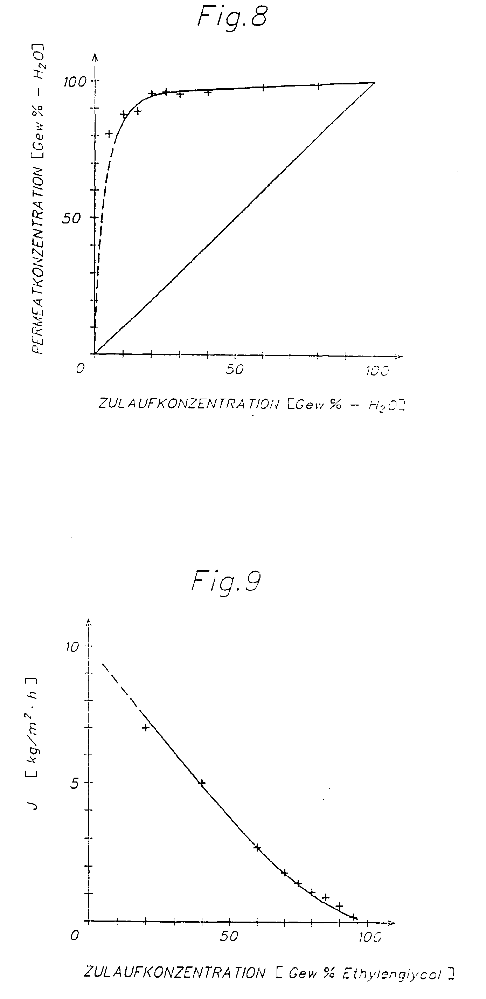

Die Trennungen wurden mit verschiedenen Zusammensetzungen des Gemischs durchgeführt, die den gesamten Konzentrationsbereich überdecken. Fig. 8 gibt die Konzentration des Wassers im Permeat in Abhängigkeit von der Konzentration des Wassers im Zulaufgemisch an.

Fig. 9 zeigt die Abhängigkeit der Gesamtflußdichte J von dem im Zulauf enthaltenen Gehalt an Monoethylenglycol.

## Beispiel 5

Eine Kollagenmembran wie in Beispiel 3 beschrieben wird zur Aufkonzentrierung von Apfelsaftaroma eingesetzt. Als Maß für die Konzentration wird der Begriff der "Konzentrationsstufe" benutzt, der angibt, wieviele Volumenanteile des entaromatisierten Safts mit einem Volumenteil des Konzentrats zu versetzen sind, um einen fertigen Saft zu erhalten.

In diesem Beispiel wurde ein Apfelsaftaroma der Konzentrationsstufe 1:150 bei einer Temperatur auf der Zulaufseite von 30°C und einem Druck auf der Permeatseite von < 4 mbar bis zu den Konzentrationsstufen 1:500 und 1:2000 aufkonzentriert.

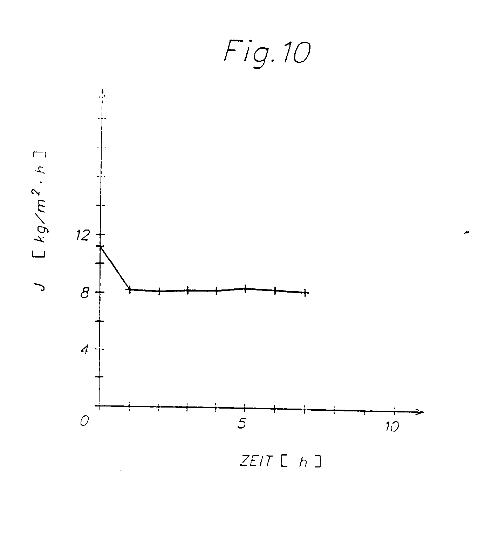

Die Flußrate ist in Fig. 10 als Funktion der Zeit dargestellt. Sie stellt sich eine Stunde nach Beginn auf den sehr hohen, konstanten Wert von ca. 8 kg/m$^2$ x h ein.

Die so erhaltenen Aromakonzentrate wurden einer in der Fruchtsaftindustrie üblichen sensorischen Auswertung unterzogen. Als Ergebnis wurde festgestellt, daß die Aufkonzentrierung unter erfindungsgemäßer Verwendung der Kollagenfolie zu keinem feststellbaren Verlust an Aromakomponenten führte.

## Beispiel 6

Eine wie in Beispiel 1 hergestellte Kollagenfolie mit einer Dicke von 25 μm wurde zur Aufkonzentrierung der Inhaltsstoffe von Weißwein durch Wasserentzug benutzt. Die Trennung erfolgte bei einer Betriebstemperatur auf der Zulaufseite von 20°C, der Druck auf der Permeatseite betrug < 10 mbar. Im Lauf des Versuchs wurden Flußraten von anfänglich 2,7 kg/m$^2$h, zum Ende von 1,4 kg/m$^2$h gemessen.

Nachdem der Ethanolgehalt auf der Zulaufseite der Membran von ursprünglich 11 auf 37% angestiegen war, wurde der Versuch abgebrochen. Das Permeat war nahezu geruchsfrei, was auf ein hohes Rückhaltevermögen der Membran bezüglich der im Wein enthaltenen Aromakomponenten schließen läßt. Der Geschmack des Retentats wurde im Rahmen einer sensorischen Prüfung überaus positiv beurteilt.

## Beispiel 7 und Vergleichsbeispiel

Die Selektivität $\alpha$ sowie die Flußraten für Wasser (J H$_2$O) wurden für die erfindungsgemäße Verwendung einer Kollagenmembran bei 30°C für eine 5- und eine 95-%ige Ethanollösung in Wasser ermittelt. Der Trennfaktor $\alpha$ der untersuchten Kollagenmembran ist berechnet aus Wp/(1-W$_p$)/W$_f$ * (1-W$_f$), wobei W$_p$ der Permeatmassenbruch und wo W$_f$ der Massenbruch des Einsatzgemisches ist.

Die experimentell unter den genannten Bedingungen ermittelten Daten wurden mit Literaturdaten für handelsübliche Pervaporationsmembranen verglichen. Die Vergleichsdaten sind in der nachfolgenden Tabelle zu-

sammengefaßt:

## Tabelle:

| Folie | Dicke($\mu$m) | T(°C) | J $H_2O$ | $\alpha$ 5% | $\alpha$ 95% |
|---|---|---|---|---|---|
| CTA | 40 | 60 | 0,21 | 2 | 10 |
| CMV | 150 | 60 | 1,67 | 2 | 7 |
| KOLL | 59 | 30 | 7,41 | 7 | 13 |

Die Literaturdaten für die CTA (Cellulosetriacetat)- und CMV-Membranen (kommerzielle lonenaustauschermembran "Selemion") wurden W. Böddeker, "Pervaporation durch Membranen und ihre Anwendung zur Trennung von Flüssiggemischen", Düsseldorf 1986, entnommen. Die zum Vergleich herangezogenen Literaturdaten beziehen sich auf eine Betriebstemperatur von 60°C. Da die Flußrate mit steigender Temperatur zunimmt, ergibt sich aus dem Vergleich der für 60°C geltenden Literaturzahlenwerte mit den für 30°C experimentell ermittelten Werten für die untersuchte Kollagenmembran, daß die Durchflußraten bei der erfindungsgemäßen Verwendung der Kollagenmembran um ein Vielfaches höhere Werte aufweisen. Für ein Ethanol/Wasser-Gemisch der geringeren Konzentration zeigt die Kollagenmembran eine um den Faktor 3,5-7 erhöhte Selektivität gegenüber den handelsüblichen Pervaporationsmembranen, für die höhere Ethanolkonzentration ist die Selektivität der Kollagenmembran gegenüber der CTA-Membran um ca. 30% erhöht und erreicht im Falle des Vergleichs mit der CMV-Membran fast den doppelten Selektivitätswert.

## Patentansprüche

1. Verwendung von Kollagenfolien als Pervaporationsmembran zur selektiven Abtrennung kleiner, polarer Moleküle aus Flüssiggemischen.

2. Verwendung nach Anspruch 1, bei der Wasser oder Methanol abgetrennt werden.

3. Verwendung nach Anspruch 1 oder 2, wobei die Kollagenfolie als Flachfolie oder Schlauchfolie eingesetzt werden kann.

4. Verwendung nach einem der Ansprüche 1-3 zur schonenden Trennung temperaturempfindlicher und/oder wertvoller Substanzen.

5. Verwendung nach einem oder mehreren der Ansprüche 1-4 zur Aufkonzentrierung von Lösungskomponenten, insbesondere zur Herstellung von Getränkekonzentraten, speziell von Fruchtsaft- oder Weinkonzentraten.

6. Verwendung nach einem oder mehreren der Ansprüche 1-5 zur Auftrennung azeotroper Gemische.

7. Verwendung nach einem oder mehreren der Ansprüche 1-6 zur Entfernung von Wasser bei chemischen Reaktionen, insbesondere Kondensationsreaktionen.

8. Verwendung nach einem oder mehreren der Ansprüche 1-7 zur Entwässerung von organischen Lösungsmitteln.

9. Verwendung nach einem oder mehreren der Ansprüche 1-4 in Bioreaktoren.

## Claims

1. The use of collagen films as pervaporation membrane for the selective separation of small polar molecules from liquid mixtures.

2. The use according to claim 1 wherein water or methanol are separated.

3. The use according to claim 1 or 2 wherein the collagen film can be used as a flat or tubular film,

4. The use according to any one of claims 1 to 3 for the mild separation of temperature-sensitive and/or valuable substances.

5. The use according to any one of claims 1 to 4 for the concentration of solution components, particularly for the production of beverage concentrates, especially of juice and wine concentrates.

6. The use according to any one of claims 1 to 5 for the separation of azeotropic mixtures.

7. The use according to any one of claims 1 to 6 for the removal of water in chemical reactions, particularly condensation reactions.

8. The use according to any one of claims 1 to 7 for dewatering organic solvents.

9. The use according to any one of claims 1 to 4 in bioreactors.


## Revendications

1. Utilisation de feuilles de collagène à titre de membranes de pervaporation pour la séparation sélective de petites molécules polaires d'avec des mélanges liquides.

2. Utilisation suivant la revendication 1, caractérisée en ce que l'on sépare de l'eau ou du méthanol.

3. Utilisation suivant la revendication 1 ou 2, caractérisée en ce que l'on utilise la feuille de collagène sous forme de feuille plane ou de feuille tubulaire.

4. Utilisation suivant l'une quelconque des revendications 1 à 3, pour la séparation ménagée de substances sensibles à la température et/ou qui présentent un intérêt.

5. Utilisation suivant une ou plusieurs des revendications 1 à 4, pour la concentration de composants de solutions, plus particulièrement pour la préparation de concentrés de boissons, plus spécialement de concentrés de jus de fruits ou de vin.

6. Utilisation suivant une ou plusieurs des revendications 1 à 5, pour la séparation de mélanges azéotropiques.

7. Utilisation suivant une ou plusieurs des revendications 1 à 5 pour l'élimination d'eau par des réactions chimiques, plus particulièrement des réactions de condensation.

8. Utilisation suivant une ou plusieurs des revendications 1 à 7 pour la déshydratation de solvants organiques.

9. Utilisation suivant une ou plusieurs des revendications 1 à 4, dans des bioréacteurs.

Fig 1

EP 0 447 467 B1

## Fig.2

PERMEATKONZENTRATION [Gew % – H₂O]

ZULAUFKONZENTRATION [Gew % – H₂O]

## Fig.3

J [kg/m² · h]

ZULAUFKONZENTRATION [ Gew % IPA ]

## Fig. 4

PERMEATKONZENTRATION [Gew % – H₂O]

ZULAUFKONZENTRATION [Gew % – H₂O]

## Fig. 5

J [kg/m² · h]

ZULAUFKONZENTRATION [ Gew % Ethanol ]

10

## Fig.6

PERMEATKONZENTRATION [Gew % — H₂O]

ZULAUFKONZENTRATION [Gew % — H₂O]

## Fig.7

J [ kg/m² · h ]

ZULAUFKONZENTRATION [ Gew % Essigsäure ]

## Fig.8

ZULAUFKONZENTRATION [Gew % — $H_2O$]

## Fig.9

ZULAUFKONZENTRATION [ Gew % Ethylenglycol ]

Fig.10